## Europäisches Patentamt
## European Patent Office
## Office européen des brevets

(19)

(11) Veröffentlichungsnummer : **0 164 670**
**B1**

(12) **EUROPÄISCHE PATENTSCHRIFT**

(45) Veröffentlichungstag der Patentschrift :
30.08.89

(51) Int. Cl.⁴ : **B 01 J 41/04, B 01 J 49/00**

(21) Anmeldenummer : 85106805.6

(22) Anmeldetag : 03.06.85

(54) Verfahren zur Herabsetzung des Waschwasser-Bedarfs von schwachbasischen Anionenaustauschern.

(30) Priorität : 15.06.84 DE 3422242

(43) Veröffentlichungstag der Anmeldung :
18.12.85 Patentblatt 85/51

(45) Bekanntmachung des Hinweises auf die Patenterteilung : 30.08.89 Patentblatt 89/35

(84) Benannte Vertragsstaaten :
BE CH DE FR GB IT LI NL SE

(56) Entgegenhaltungen :
DE-B- 1 063 986
DE-C- 759 180
FR-A- 2 055 000
US-A- 2 354 172
CHEMICAL ABSTRACTS, Band 78, Nr. 12, 26. März 1973, Seite 233, Zusammenfassung Nr. 75701y, Columbus, Ohio, US; T.N. LAVRISHCHEVA et al.: "Development of a resin regeneration system with the circulation of regenerating solutions and wash waters", & KHARCHOVA PROM. 1972, (5), 27-30
PATENTS ABSTRACTS OF JAPAN, Band 6, Nr. 68 (C-100)[946], 30. April 1982; & JP - A - 57 7263 (SEISAN KAIHATSU KAGAKU KENKYUSHO) 14-01-1982
idem

(73) Patentinhaber : BAYER AG

D-5090 Leverkusen 1 Bayerwerk (DE)

(72) Erfinder : Heller, Harold, Dr.
Hufelandstrasse 59
D-5000 Köln 80 (DE)
Erfinder : Lange, Peter, Michael, Dr.
Walter-Flex-Strasse 9
D-5090 Leverkusen 1 (DE)
Erfinder : Martinola, Friedrich, Dr.
Leopold-Gmelin-Strasse 16
D-5000 Köln 80 (DE)

EP 0 164 670 B1

**Beschreibung**

Gemäß den Angaben der Ionenaustauscher-Hersteller erfordern stark- und schwachbasische Anionenaustauscher etwa 5 bis 10 Bettvolumina (Bettvolumen = Volumen des Anionenaustauschers) Waschwasser zum Verdrängen der für die Regeneration verwendeten Natronlauge aus den Anionenaustauschern. Üblicherweise gilt ein Anionenaustauscher als hinreichend ausgewaschen, wenn die Leitfähigkeit des aus ihm ablaufenden Waschwassers auf 50 µS/cm abgesunken ist. In bestimmten Fällen können auch Restleitfähigkeiten im ablaufenden Waschwasser von nur 10 µS/cm verlangt werden. In diesen Fällen steigt der Bedarf an Waschwasser auf 8 bis 12 Bettvolumina.

Schwachbasische Anionenaustauscher haben die nachteilige Eigenschaft, daß sich ihr Waschwasserbedarf beim Gebrauch ändern und zwar zunehmen kann, wenn das Beladungswasser bestimmte Substanzen enthält.

So beobachtet man z. B. bei schwachbasischen Anionenaustauschern mit tertiären Aminogruppen einen Anstieg des Waschwasser-Bedarfs, wenn das Beladungswasser bestimmte Carboxylgruppenhaltige Verbindungen enthält. Schwachbasische Anionenaustauscher mit primären und/oder sekundären Aminogruppen zeigen einen starken Anstieg des Waschwasser-Bedarfs, wenn das für ihre Beladung verwendete Wasser Kohlensäure enthält. Bei Verwendung von Kohlensäure-haltigem Beladungswasser steigt der Waschwasser-Bedarf, um die gewünschte Restleitfähigkeit von 50 µS/cm im ablaufenden Waschwasser zu erreichen, bereits nach wenigen Beladungszyklen von 5 bis 10 Bettvolumina auf 25 bis 40 Bettvolumina. Die Erhöhung des Waschwasser-Bedarfs führt zu einer unerwünschten Verlängerung der Regenerationszeit und — da sich der Anionenaustauscher unvermeidlich mit den Anionen des Waschwassers belädt — auch zu einer Herabsetzung der nutzbaren Kapazität des Anionenaustauschers.

Überraschenderweise wurde nun gefunden, daß man eine Zunahme des Waschwasser-Bedarfs von schwachbasischen, primäre und/oder sekundäre Aminogruppen enthaltenden Anionenaustauschern bei Beladung mit Kohlensäurehaltigem Wasser dadurch vermeiden kann, daß man die erschöpften (= vollständig beladenen) Anionenaustauscher vor ihrer Regenerierung mit Natronlauge mit bestimmten Mengen verdünnter wäßriger Mineralsäure behandelt.

Die Erfindung betrifft daher ein Verfahren zur Herabsetzung des Waschwasser-Bedarfs schwachbasischer, primäre und/oder sekundäre Aminogruppen enthaltender Anionenaustauscher bei der Beladung mit Kohlensäurehaltigem Wasser, das dadurch gekennzeichnet ist, daß man die erschöpften Anionenaustauscher, bevor man sie in üblicher Weise mit wäßrigen Alkalien regeneriert und anschließend mit Wasser auswäscht, mit einer solchen Menge 0,5 bis 10 Gew.-%iger wäßriger Mineralsäure behandelt, daß auf 1 Äquivalent nutzbare Kapazität des schwachbasischen Anionenaustauschers mindestens 0,25 Äquivalente Mineralsäure entfallen.

Als verdünnte wäßrige Mineralsäuren kommen vor allem verdünnte wäßrige Salzsäure, verdünnte wäßrige Salpetersäure und verdünnte wäßrige Schwefelsäure in Betracht. Anstelle verdünnter wäßriger Lösungen reiner Säuren können auch Mineralsäure-haltige Regeneriermittel-Abläufe von Kationenaustauschern verwendet werden.

Die erfindungsgemäß zu verwendenden verdünnten wäßrigen Mineralsäurelösungen werden in einer solchen Menge eingesetzt, daß auf ein Äquivalent nutzbarer Kapazität des schwachbasischen Anionenaustauschers vorzugsweise 0,35 bis 1,0 Äquivalente Mineralsäure entfallen. Höhere Mengen an Mineralsäure können zwar verwendet werden, bringen aber keinen Vorteil mehr. Die reaktivierende Wirkung der Schwefelsäure ist etwas schwächer als die der Salzsäure und der Salpetersäure ; bei Verwendung von Schwefelsäure wird man daher mehr im oberen Bereich, bei Verwendung von Salzsäure oder Salpetersäure mehr im unteren Bereich des angegebenen Äquivalent-Bereichs arbeiten.

Die erfindungsgemäße Säurebehandlung der erschöpften schwachbasischen Anionenaustauscher mit primären und/oder sekundären Aminogruppen wird in der Weise vorgenommen, daß man die verdünnten wäßrigen Mineralsäuren über die vollständig beladenen schwachbasischen Anionenaustauscher mit in der Anionenaustauscher-Technik üblichen Strömungsgeschwindigkeiten filtriert.

Die erfindungsgemäße Behandlung der schwachbasischen Anionenaustauscher mit bestimmten Mengen wäßriger Mineralsäure-Lösungen vor der Regeneration mit Natronlauge unterscheidet sich von der in der DE-OS 17 67 584 beschriebenen Behandlung partiell beladener schwachbasischer Anionenaustauscher mit wäßrigen Mineralsäure-Lösungen a) im Zweck und b) in der Ausführung. Das in der DE-OS 17 67 584 beschriebene Verfahren betrifft die Lösung der technischen Aufgabe, saure und alkalische Regeneriermittel-Abläufe aus Ionenaustauschern auf wirtschaftliche Weise zu neutralisieren. Das erfindungsgemäße Verfahren betrifft dagegen die Lösung der technischen Aufgabe, den Waschwasserbedarf von schwachbasischen, primäre und/oder sekundäre Aminogruppen enthaltenden mit Kohlensäure-haltigem Wasser beladenen Anionenaustauschern herabzusetzen. Entsprechend ihren unterschiedlichen Aufgaben unterschieden sich die beiden Verfahren in ihrer Ausführung :

Gemäß dem in der DE-OS 17 67 584 beschriebenen Verfahren werden partiell beladene schwachbasische Anionenaustauscher mit Mineralsäure-haltigen wäßrigen Lösungen behandelt, bis sie vollständig beladen sind und dann regeneriert ; bei dem erfindungsgemäßen Verfahren werden dagegen vollständig beladene schwachbasische Anionenaustauscher der erfindungsgemäßen Säurebehandlung und dann der Regeneration unterworfen. Die Säurebehandlung gemäß DE-OS 17 67 584 bezweckt und erreicht

2

nichts anderes, als die Ausnutzung der noch nicht verbrauchten Anionenaustauscher-Kapazität zum Neutralisieren der in den Kationenaustauscher-Abläufen enthaltenen Mineralsäure. Bei der erfindungsgemäßen Säurebehandlung findet dagegen keinerlei Neutralisation von Säuren statt und kann auch nicht stattfinden, weil die Kapazität der Anionenaustauscher bereits vollständig verbraucht ist, ehe die Säurebehandlung beginnt.

Aus der US-A 2 354 172 ist ein Verfahren zum wirksamen Auswaschen von Anionenaustauschern bekannt; dieses Verfahren besteht darin, die erschöpften Anionenaustauscher mit aus einem vorgeschalteten Kationenaustauscher ablaufenden wäßrigen Säuren bis zum Durchbruch zu beladen, dann von weiterer Säurelösung durchströmen zu lassen, bis der den Anionenaustauscher verlassende Ablauf einen pH-Wert von 1,93 (Beispiel 1) oder 3,6 (Beispiel 2) aufweist, diesen schwachsauren Ablauf getrennt aufzufangen und nach dem Regenerieren des Anionenaustauschers mit wäßrigen Alkalien zum Auswaschen der alkalischen Regenerierlösung aus dem Anionenaustauscher zu verwenden.

Durch das erfindungsgemäße Verfahren werden die Verwendungsmöglichkeiten schwachbasischer Anionenaustauscher mit primären und/oder sekundären Aminogruppen für die Entsalzung wäßriger, Kohlensäure enthaltender Lösungen wesentlich verbessert. Die Verwendung schwachbasischer Anionenaustauscher mit primären und/oder sekundären Aminogruppen in Entsalzungsanlagen für Kohlensäurehaltiges Wasser ist deshalb von großem praktischen Interesse, weil diese schwachbasischen Anionenaustauscher meist eine erheblich höhere nutzbare Kapazität aufweisen als die schwachbasischen Anionenaustauscher mit tertiären Aminogruppen und das in Entsalzungsanlagen zu behandelnde Wasser sehr häufig Kohlensäure enthält. Der Verwendung der schwachbasischen Anionenaustauscher mit primären und/oder sekundären Aminogruppen stand bislang der mit ihrem Gebrauch verbundene Anstieg des Waschwasser-Bedarfs und der damit verbundene Abfall ihrer nutzbaren Kapazität entgegen. Da zur erfindungsgemäßen, den Anstieg des Waschwasserbedarfs hemmenden Säurebehandlung keine verdünnten wäßrigen Lösungen reiner Mineralsäuren erforderlich sind, sondern mit gleichem Erfolg die Mineralsäure-haltigen Regenerat-Abläufe aus dem vorgeschalteten Kationenaustauscher verwendet werden können, stellt das erfindungsgemäße Verfahren eine praktisch kostenlose Maßnahme dar.

## Beispiele

Allgemeine Versuchsbedingungen:
Für die Beladung der schwachbasischen Anionenaustauscher mit primären und/oder sekundären Aminogruppen wurde ein voll entbastes Wasser folgender Zusammensetzung verwendet:

| | |
|---|---|
| $HCl + H_2SO_4 + HNO_3$ | 5 bis 6 meq/l |
| freie $CO_2$ | 110-140 mg/l |

Die einzelnen Versuche wurden jeweils mit einem Liter Anionenaustauscher (gemessen im regenerierten Zustand) ausgeführt. Der Austauscher befand sich in einer Filtersäule mit einem Durchmesser von 70 mm.

Die Beladung des Anionenaustauschers mit dem oben angegebenen entbasten Wasser wurde mit einer Geschwindigkeit von 20 l/h vorgenommen.

Anfangs- und Endpunkt der Beladung: Eine Restleitfähigkeit von 50 µS/cm im Ablauf der Filtersäule.

Die Behandlung des beladenen Anionenaustauschers mit der verdünnten wäßrigen Lösung einer Mineralsäure wurde mit einer Geschwindigkeit von 5 l/h vorgenommen. Anschließend an die Behandlung wurde die Säurelösung mit 2 Liter entbastem Wasser verdrängt.

Die Regeneration des beladenen und behandelten Anionenaustauschers wurde mit 4 %iger Natronlauge vorgenommen; die Natronlauge wurde mit 2 Liter entbastem Wasser verdrängt. Anschließend wurde mit entbastem Waschwasser mit einer Geschwindigkeit von 10 l/h ausgewaschen, bis die Leitfähigkeit in dem aus dem Filter ablaufenden Waschwasser wieder auf 50 µS/cm abgesunken war.

## Beispiel 1

Der verwendete schwachbasische Anionenaustauscher enthält ausschließlich primäre Aminogruppen; seine nutzbare Kapazität (NK) beträgt 1,4 Äquivalente/l Harz. Die Regenerierung wird mit 3 Litern 4 Gew.-%iger Natronlauge und die Beladung mit 280 Litern entbastem Wasser vorgenommen.

Aus Tabelle 1 ist ersichtlich, wie der Waschwasser-Bedarf mit der Zahl der Beladungen ansteigt.

### Tabelle 1

| Zahl der Beladungen | Waschwasserbedarf /l/ = /BV/ |
|---|---|
| 1 | 7 |
| 2 | 15 |

Tabelle 1 (Fortsetzung)

| Zahl der Beladungen | Waschwasserbedarf $\underline{/l/} = \underline{/B/}$ |
|---|---|
| 3 | 20 |
| 4 | 32 |
| 5 | 38 |

Nach der 6. Beladung wird der schwachbasische Anionenaustauscher mit 100 g 30 Gew.-%iger Salzsäure (in Form einer 3 %igen wäßrigen Lösung) behandelt; nach dieser Säurebehandlung beträgt der Waschwasserbedarf nach der nächsten Regeneration nur noch 5 Liter.

Beispiel 2

Der verwendete Anionenaustauscher enthält primäre, sekundäre und tertiäre Aminogruppen; seine nutzbare Kapazität (NK) beträct 2,1 Äquivalente/Liter Harz.

Die Regeneration wird mit 4 Litern 4 Gew.-%iger Natronlauge und die Beladung mit einer der nutzbaren Kapazität des Anionenaustauschers entsprechenden Menge entbastem Wasser vorgenommen.

Aus Tabelle 2 ist ersichtlich, wie sich der Waschwasser-Bedarf mit der Zahl der Beladungen erhöht und die nutzbare Kapazität des Anionenaustauschers (= Volumen an entbastem Wasser, das über den Anionenaustauscher filtriert werden kann, bis die Restleitfähigkeit im Ablauf über 50 $\mu$S/cm ansteigt) ohne Säurebehandlung abfällt.

Nach der 7. Beladung wird der Anionenaustauscher mit 200 g 30 Gew.-%iger Salzsäure (in Form einer 3 %igen wäßrigen Lösung) behandelt.

Aus Tabelle 2 wird erkennbar, wie der Waschwasserbedarf mit zunehmender Zahl der Beladungen zu- und die nutzbare Kapazität des Anionenaustauschers abnimmt und wie Waschwasserbedarf und nutzbare Kapazität nach der Säurebehandlung auf ihren ursprünglichen Wert abfallen bzw. ansteigen.

(Siehe Tabelle 2 Seite 5 f.)

## Tabelle 2

### Nutzbare Kapazität

| Zahl der Beladungen | * $\angle\bar{1}$ entbastes Wasser$\angle$ | $\angle$Äquiv./l Harz$\angle$ | Waschwasserbedarf $\angle\bar{1}\angle$ = $\angle\bar{B}\underline{V}\angle$ |
|---|---|---|---|
| 1 | 380 | 2,1 | 6 |
| 3 | 365 | 2,0 | 20 |
| 5 | 345 | 1,9 | 28 |
| 7 | 340 | 1,87 | 37 |
| 8 | 380 | 2,1 | 6 |

*) veranschaulicht durch das Volumen (1) entbasten Wassers, das bis zur Erschöpfung des Anionenaustauschers (d. h. bis zum Anstieg der Restleitfähigkeit im Ablauf auf > 50 µS/cm) über diesen geleitet werden kann

EP 0 164 670 B1

Beispiel 3

Es wird der in Beispiel 2 verwendete schwachbasische Anionenaustauscher verwendet. Nach 5 Beladungen des Anionenaustauschers ohne Säurebehandlung vor der Regeneration beträgt sein Waschwasserbedarf 28 Liter.

Nachdem der Waschwasserbedarf auf 28 Liter angestiegen ist, wird der Anionenaustauscher in verschiedenen Versuchen mit verschiedenen Mengen verschiedener Säuren vor der Regeneration vorbehandelt.

Aus Tabelle 3 ist ersichtlich, wie sich der auf 28 Liter angestiegene Waschwasserbedarf in Abhängigkeit von der für die Vorbehandlung des beladenen Anionenaustauschers verwendete Säure und Säuremenge ändert. Die in Tabelle 3 angegebenen Säuremengen beziehen sich auf 100 %ige Säuren. Die Säuren wurden jedoch in Form verdünnter wäßriger Lösungen, und zwar die Salzsäure in Form einer 3 %igen wäßrigen Lösung, die Salpetersäure in Form einer 4 %igen wäßrigen Lösung und die Schwefelsäure in Form einer 2 %igen wäßrigen Lösung angewendet.

(Siehe Tabelle 3 Seite 7 f.)

Tabelle 3

Säuren

| $H_2SO_4$ (100 %ig) | | HCl (100 %ig) | | $HNO_3$ (100 %ig) | | Waschwasserbedarf (1) |
|---|---|---|---|---|---|---|
| $\underline{/g/}$ | $\underline{/Äquiv./}$ | $\underline{/g/}$ | $\underline{/Äquiv./}$ | $\underline{/g/}$ | $\underline{/Äquiv./}$ | |
| 0 | 0 | 0 | 0 | 0 | 0 | 28 |
| 14,4 | 0,294 | 9 | 0,247 | 15,6 | 0,247 | 21 |
| 28,8 | 0,588 | 19,5 | 0,534 | 33,6 | 0,534 | 13 |
| 57,6 | 1,196 | 36 | 0,986 | 63 | 1,00 | 9 |
| 86,3 | 1,76 | 60 | 1,65 | 105 | 1,66 | 6 |

EP 0 164 670 B1

## Beispiel 4

Der in Beispiel 2 verwendete schwachbasische Anionenaustauscher wird zusammen mit einem vorgeschalteten sauren Kationenaustauscher in einer Entsalzungsanlage eingesetzt. Nach erfolgter Beladung wird der Kationenaustauscher mit Salzsäure regeneriert. Die aus dem Kationenaustauscher ablaufende Regeneriersäure enthält noch 1 Äquivalent/l freie Salzsäure. Dieses Regenerat wird unmittelbar über den erschöpften schwachbasischen Anionenaustauscher geleitet, bevor dieser mit Natronlauge regeneriert wird.

Die Entsalzungsleistung (Volumen an entsalztem Wasser) betrug über 5 Arbeitszyklen (Arbeitszyklus = Beladung + Regeneration) unverändert 350 Liter, der Waschwasserverbrauch 5 bis 6 Liter. Ohne die Vorbehandlung des Anionenaustauschers mit dem sauren Regenerat aus dem Kationenaustauscher steigt der Waschwasserverbrauch auf 32 Liter.

## Patentansprüche

1. Verfahren zur Herabsetzung des Waschwasserbedarfs schwachbasischer, primäre und/oder sekundäre Aminogruppen enthaltender Anionenaustauscher bei der Beladung mit Kohlensäure-haltigem Wasser, dadurch gekennzeichnet, daß man die erschöpften schwachbasischen Anionenaustauscher, bevor man sie in üblicher Weise mit wäßrigen Alkalien regeneriert und anschließend mit Wasser auswäscht, mit einer solchen Menge 0,5 bis 10 Gew.-%iger wäßriger Mineralsäure behandelt, daß auf 1 Äquivalent nutzbare Kapazität des schwachbasischen Anionenaustauschers mindestens 0,25 Äquivalente Mineralsäure entfallen.

2. Verfahren gemäß Anspruch 1, dadurch gekennzeichnet, daß man die Mineralsäuren in einer solchen Menge einsetzt, daß auf 1 Äquivalent nutzbare Kapazität des schwach basischen Anionenaustauschers 0,35 bis 1,0 Äquivalente Mineralsäure entfallen.

3. Verfahren gemäß Anspruch 1, dadurch gekennzeichnet, daß man als verdünnte wäßrige Mineralsäure verdünnte wäßrige Salzsäure, verdünnte wäßrige Salpetersäure oder verdünnte wäßrige Schwefelsäure verwendet.

4. Verfahren gemäß Anspruch 1, dadurch gekennzeichnet, daß man als verdünnte wäßrige Mineralsäuren Mineralsäure-haltige Regeneriermittelabläufe von Kationenaustauschern verwendet.

## Claims

1. Process for reducing the wash water required by weakly basic anion exchangers containing primary and/or secondary amino groups when fed with water containing carbon dioxide, characterized in that the exhausted, weakly basic anion exchangers are treated with an amount of 0.5 to 10 % strength by weight aqueous mineral acid such that there are at least 0.25 equivalents of mineral acid to 1 equivalent of usable capacity of the weakly basic anion exchanger, before they are regenerated in the usual manner with aqueous alkalis and subsequently washed out with water.

2. Process according to Claim 1, characterized in that the mineral acids are employed in an amount such that there are 0.35 to 1.0 equivalents of mineral acid to 1 equivalent of usable capacity of the weakly basic anion exchanger.

3. Process according to Claim 1, characterized in that the dilute aqueous mineral acid used is dilute aqueous hydrochloric acid, dilute aqueous nitric acid or dilute aqueous sulphuric acid.

4. Process according to Claim 1, characterized in that regeneration agent effluents, containing mineral acid, from cation exchangers are used as dilute aqueous mineral acids.

## Revendications

1. Procédé pour diminuer les besoins en eau de lavage d'échangeurs d'anions faiblement basiques contenant des groupes amino primaires et/ou secondaires à la charge par de l'eau contenant de l'acide carbonique, caractérisé en ce que, avant de les régénérer de la manière habituelle par des alcalis aqueux puis de les laver à l'eau, on traite les échangeurs d'anions faiblement basiques épuisés par un acide minéral aqueux à une concentration de 0,5 à 10 % en poids en quantité correspondant à au moins 0,25 équivalent d'acide minéral par équivalent de la capacité utile de l'échangeur d'anions faiblement basique.

2. Procédé selon la revendication 1, caractérisé en ce que l'on utilise les acides minéraux en quantité correspondant à 0,35 à 1,0 équivalent d'acide minéral par équivalent de la capacité utile de l'échangeur d'anions faiblement basique.

3. Procédé selon la revendication 1, caractérisé en ce que l'on utilise en tant qu'acide minéral aqueux dilué de l'acide chlorhydrique aqueux dilué, de l'acide nitrique aqueux dilué ou de l'acide sulfurique aqueux dilué.

4. Procédé selon la revendication 1, caractérisé en ce que l'on utilise en tant qu'acides minéraux aqueux dilués des effluents de régénération, contenant des acides minéraux, d'échangeurs de cations.